# FASCICULE DE BREVET EUROPEEN

(11) **EP 1 801 956 B1**
(45) Date de publication et mention de la délivrance du brevet: **08.07.2009**
(21) Numéro de dépôt: 06291970.9
(22) Date de dépôt: 18.12.2006
(51) Int. Cl.: H02K 33/02, H02K 41/02

(54) **Dispositif de déplacement linéaire d'un corps entre deux positions prédéterminées**
Anordnung zum geradlinigen Verschieben eines Objectes zwischen zwei vorgegebenen Positionen
Device for translating an object between two predetermined positions

(30) Priorité: 22.12.2005 FR 0513168
(43) Date de publication de la demande: 27.06.2007
(73) Titulaire: Sagem Défense Sécurité, 75015 Paris (FR)
(72) Inventeur: Roche, Sylvain, 75015 Paris (FR)
(74) Mandataire: Gorrée, Jean-Michel

(56) Documents cités:
- US-A1- 2003 155 820
- PATENT ABSTRACTS OF JAPAN vol. 2003, no. 12, 5 décembre 2003 (2003-12-05) -& JP 2004 140974 A (HIIHAISUTO SEIKO KK), 13 mai 2004 (2004-05-13)
- PATENT ABSTRACTS OF JAPAN vol. 1996, no. 11, 29 novembre 1996 (1996-11-29) -& JP 08 187646 A (TOSHIBA MACH CO LTD), 23 juillet 1996 (1996-07-23)
- PATENT ABSTRACTS OF JAPAN vol. 015, no. 110 (E-1046), 15 mars 1991 (1991-03-15) -& JP 03 003654 A (SEIBU ELECTRIC & MACH CO LTD), 9 janvier 1991 (1991-01-09)
- PATENT ABSTRACTS OF JAPAN vol. 1995, no. 01, 28 février 1995 (1995-02-28) -& JP 06 303737 A (YASKAWA ELECTRIC CORP), 28 octobre 1994 (1994-10-28)

## Description

La présente invention concerne le domaine du déplacement en translation, c'est-à-dire sur une trajectoire sensiblement linéaire, d'un corps entre une première et une seconde positions prédéterminées.

Notamment, l'invention concerne le déplacement d'un corps en translation entre une première position stable (en particulier une position de repos) et une seconde position nécessitant un apport d'énergie constant, mais minimum pour être maintenue. De préférence, la première position stable doit être une position de sécurité, c'est-à-dire qu'elle doit être rejointe par le corps en cas de défaut d'alimentation en énergie requise pour le maintien de la seconde position. Enfin, le corps peut être soumis à des facteurs de charge et doit pouvoir être maintenu dans les première et seconde positions en présence de ces facteurs de charge.

Face au problème posé, une solution technique pourrait consister à mettre en oeuvre un électroaimant fonctionnellement associé à un ressort de rappel vers la première position stable. L'excitation de l'électroaimant permet de vaincre l'effort antagoniste dû au ressort et ainsi de translater le corps vers la seconde position. La précontrainte du ressort permet le maintien du corps dans la première position en présence de charges inférieures à cette précontrainte. Pour ce qui concerne l'aspect sécuritaire, le ressort de rappel ramène spontanément le corps dans la première position en cas de suppression d'alimentation en énergie de l'électroaimant.

Toutefois, l'inconvénient de cette solution classique réside dans le fait que le maintien du corps dans la seconde position, qui nécessite un apport constant d'énergie correspondant au moins à celui nécessaire pour que l'électroaimant surmonte l'effort engendré par le ressort de rappel comprimé, ne répond pas à l'attente d'un apport minimum d'énergie.

Une autre solution pourrait consister à mettre en oeuvre un motoréducteur associé à un dispositif de transmission vis-écrou ou à engrenages pour translater le corps ; la présence d'un dispositif d'embrayage peut procurer l'effet sécuritaire recherché.

Toutefois, cette autre solution présente plusieurs inconvénients. Les motoréducteurs propres à transformer le mouvement de rotation du moteur en un mouvement de translation sous un effort de traction suffisant ne permettent pas d'assurer un temps de trajet entre les première et seconde positions aussi court que celui procuré par un électroaimant. De plus, la mise en oeuvre d'une transmission vis-écrou abaisse très sensiblement le rendement du dispositif. En outre, une telle transmission est généralement irréversible : la satisfaction de l'impératif de sécurité conduit alors à employer un dispositif de débrayage de la vis ou de l'écrou afin d'autoriser un libre retour dans la première position.

Dans ces conditions, si l'on ajoute encore des exigences supplémentaires - telles que la recherche d'une course faible et parcourue en un temps minimum, ou aussi la recherche d'un dispositif occupant un espace parallélépipédique aussi réduit que possible, ou encore la recherche d'une consommation énergétique aussi faible que possible pour rester compatible avec une ressource énergétique faible et partagée avec plusieurs autres dispositifs vitaux dans un système global -, on conçoit que les solutions classiques évoquées plus haut ne peuvent aucunement répondre aux diverses et nombreuses exigences.

Pour fixer les idées, une application particulière, bien que non exclusive, visée par l'invention réside dans la stabilisation d'une charge optronique, tel qu'un viseur monté sur véhicule, dans un milieu pouvant être fortement vibratoire avec maintien de la direction de visée, et plus précisément dans la stabilisation des senseurs optroniques dont, au repos, les axes fins doivent être bloqués par un dispositif peu encombrant et peu consommateur d'énergie électrique. Dans ce cas, le corps à déplacer est un organe (doigt, pion ou analogue) de blocage appartenant à un support ou à la charge à bloquer et propre à être engagé dans un logement appartenant respectivement à la charge ou au support (première position stable, devant être occupée de façon sécuritaire, de blocage de la charge) ou à en être dégagé (seconde position, maintenue, de libération de la charge).

L'invention a essentiellement pour but de satisfaire les diverses exigences de la pratique en proposant un dispositif perfectionné qui, notamment, soit fiable, sécuritaire, rapide et économe en énergie, et qui soit réalisable sous forme compacte.

A ces fins, l'invention propose un dispositif de déplacement, sur une trajectoire sensiblement linéaire, d'un corps entre une première et une seconde positions prédéterminées, lequel dispositif se caractérise selon l'invention en ce qu'il comprend :
- un premier électroaimant qui possède un premier noyau mobile solidaire dudit corps et qui est agencé pour avoir un axe d'action sur ledit corps sensiblement parallèle à ladite trajectoire linéaire,
- un second électroaimant qui possède un second noyau mobile solidaire dudit corps et qui est agencé pour avoir un axe d'action sur ledit corps sensiblement parallèle à ladite trajectoire linéaire, et
- un aimant permanent associé fonctionnellement au premier noyau en étant disposé de manière à coagir magnétiquement fonctionnellement avec ledit premier noyau lorsque le corps se trouve dans sa première position.

Grâce à cet agencement, le dispositif est propre à fonctionner de la façon suivante :
- dans la première position du corps, les deux électroaimants ne sont pas excités et l'aimant permanent coagit magnétiquement avec le premier noyau en verrouillant, via celui-ci, le corps dans ladite première position,
- pour déplacer le corps de sa première à sa seconde position, on excite le premier électroaimant de façon polarisée de manière à générer un champ magnétique égal et de sens opposé à celui engendré par l'aimant permanent, le premier noyau du premier électroaimant étant ainsi déverrouillé, et on excite le second électroaimant qui amène le corps dans sa seconde position en entraînant le premier noyau, le premier électroaimant étant désexcité dès que le premier noyau est écarté de l'aimant permanent,
- le corps est maintenu dans ladite seconde position tant que le second électroaimant est excité, et
- pour déplacer le corps de sa seconde position dans ladite première position, on entraîne le corps de ladite seconde position vers ladite première position en entraînant aussi le premier noyau qui est amené en coaction fonctionnelle magnétique avec l'aimant permanent.

On constitue ainsi un dispositif qui répond parfaitement aux buts fixés pour ce qui est de la fiabilité de fonctionnement, de la rapidité de passage d'une position à l'autre et de l'économie en énergie.

Pour ce qui est du passage de la seconde position vers la première position, plusieurs solutions sont envisageables, comme par exemple une excitation avec des polarités appropriées du premier et/ou du second électroaimants. Toutefois, une solution préférée consiste en que le dispositif comporte des moyens de rappel, notamment de façon simple au moins un ressort de rappel, associés fonctionnellement au corps de manière telle que les moyens de rappel soient inopérants lorsque le corps se trouve dans sa première position et soient propres à rappeler le corps vers sa première position lorsque ledit corps est dans sa seconde position. Ainsi, pour ramener le corps de sa seconde position à sa première position, on désexcite le second électroaimant et le corps est ramené dans sa première position par les moyens de rappel. De plus, les moyens de rappel sont propres à ramener automatiquement le corps vers la première position en cas de coupure accidentelle de l'alimentation électrique, de sorte que cet agencement répond à la condition de sécurité susceptible d'être requise dans certaines applications.

Avantageusement, on prévoit que les premier et second électroaimants sont agencés avec des fonctionnements en opposition de manière telle que le noyau de l'un soit en position saillante alors que le noyau de l'autre est en position enfoncée, et inversement. On est ainsi assuré qu'un des électroaimants est dans la position où il peut développer l'effort maximum et que le fonctionnement du dispositif s'effectue toujours avec une vitesse maximale.

Bien qu'il ne s'agisse pas là de la seule solution possible, un agencement structurel remarquablement simple consiste en ce que les premier et second électroaimants soient disposés sensiblement parallèlement l'un à l'autre.

On peut également envisager, en particulier pour ce qui concerne la compacité et la faculté de réaliser un dispositif préassemblé et facile à installer, que les deux électroaimants soient disposés d'un même côté du corps ; il est alors possible de réaliser le dispositif de façon compacte, par exemple dans un gabarit parallélépipédique rectangle de dimensions prédéterminées en fonction de la place disponible pour son implantation. Mais il est également possible, au moins pour répondre à des conditions de montage et/ou de fonctionnement spécifiques, que les deux électroaimants soient disposés de part et d'autre du corps, et dans ce cas on peut envisager que les deux noyaux respectifs soient disposés sensiblement coaxialement l'un à l'autre. Toutefois, si besoin en est, d'autres configurations peuvent être adoptées et les deux électroaimants peuvent ne pas être parallèles l'un à l'autre, par exemple en associant au noyau mobile d'au moins l'un d'eux un renvoi d'angle pivotant permettant de transmettre le déplacement linéaire du noyau dans une direction désaxée.

L'invention sera mieux comprise à la lecture de la description détaillée qui suit de certains modes de réalisation préférés donnés seulement à titre d'exemples purement illustratifs. Dans cette description, on se réfère aux dessins annexés sur lesquels :
- les figures 1A et 1B sont des représentations schématiques d'un mode de réalisation préféré d'un dispositif conforme à l'invention montré dans deux positions fonctionnelles respectives ;
- les figures 2A et 2B sont des représentations schématiques d'une variante de réalisation du dispositif des figures 1A et 1B, montré dans deux positions fonctionnelles respectives ;
- les figures 3A et 3B sont des représentations schématiques d'un autre mode de réalisation d'un dispositif conforme à l'invention, montré dans deux positions fonctionnelles respectives ; et
- la figure 4 est une vue simplifiée en perspective d'une réalisation concrète possible d'un dispositif conforme aux figures 1A, 1B.

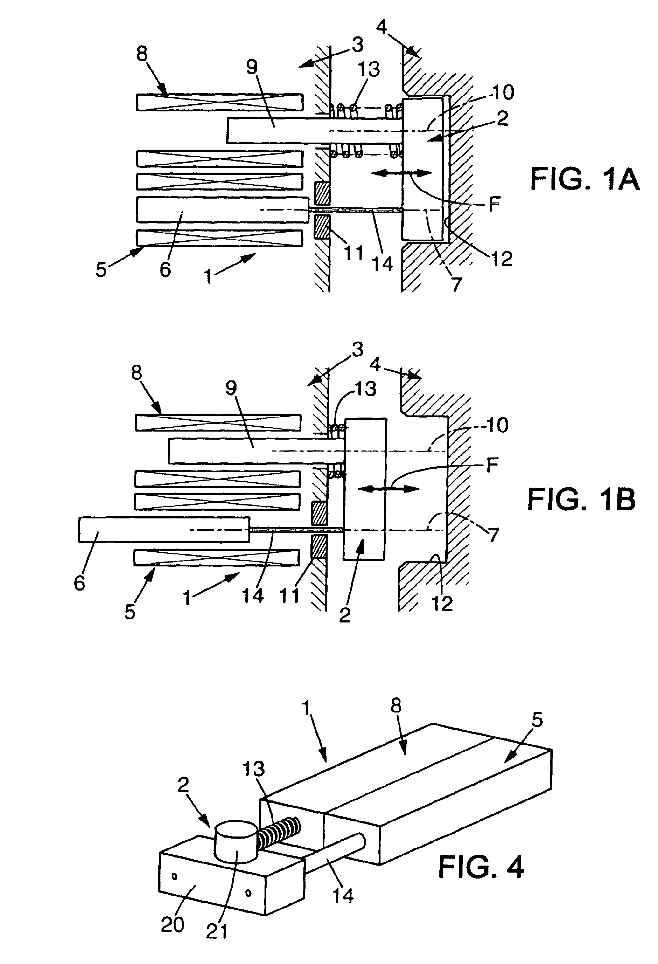

En se reportant tout d'abord aux figures 1A et 1B, il y est représenté un mode de réalisation préféré d'un dispositif, désigné dans son ensemble par la référence 1, propre à déplacer, sur une trajectoire sensiblement linéaire (flèche F), un corps 2 entre une première position (figure 1A) et une seconde position (figure 1B) prédéterminées. Pour fixer les idées, mais bien qu'il ne s'agisse pas là de l'unique application du dispositif conforme à l'invention, le corps 2 peut être un verrou mobile permettant de solidariser l'une à l'autre (figure 1A) ou de libérer l'une de l'autre (figure 1B) deux pièces respectivement 3 et 4 dont l'une peut être une pièce fixe et l'autre une pièce mobile devant pouvoir être immobilisée sur commande. Par exemple, la première position (figure 1A) peut devoir être une position de repos et une position de sécurité devant être occupée en cas d'incident, notamment en cas de coupure d'alimentation électrique.

Le dispositif 1 comprend :
- un premier électroaimant 5 qui possède un premier noyau 6 mobile solidaire dudit corps 2 et qui est agencé pour avoir un axe 7 d'action sur ledit corps 1 sensiblement parallèle à ladite trajectoire F linéaire,
- un second électroaimant 8 qui possède un second noyau 9 mobile solidaire dudit corps 1 et qui est agencé pour avoir un axe 10 d'action sur ledit corps 1 sensiblement parallèle à ladite trajectoire F linéaire, et
- un aimant permanent 11 solidaire de la structure du dispositif associé fonctionnellement au premier noyau 6 en étant disposé de manière à coagir magnétiquement fonctionnellement avec ledit premier noyau 6 (c'est-à-dire soit directement avec le premier noyau 6 comme illustré sur les figures, soit avec un élément solidaire de ce premier noyau 6) lorsque le corps 1 se trouve dans sa première position.

Dans le mode de réalisation préféré illustré aux figures 1A et 1B, les premier et second électroaimants 5 et 8 respectivement sont disposés sensiblement parallèlement l'un à l'autre, bien que, comme cela sera exposé plus loin à l'aide d'un exemple, d'autres configurations de montage soient possibles. De plus, toujours à titre d'exemple, les deux électroaimants 5, 8 sont disposés d'un même côté du corps 2. Il est ainsi possible de constituer le dispositif 2 sous forme d'un sous-ensemble compact et de faibles dimensions, par exemple de forme générale parallélépipédique rectangle et aisé à loger dans un emplacement réduit de la pièce 3 qui le supporte.

On notera également que les premier et second électroaimants 5 et 8 respectivement sont agencés avec des fonctionnements en opposition de manière telle que le noyau 9 de l'un soit en position saillante partiellement hors du bobinage alors que le noyau 6 de l'autre est en position enfoncée dans le bobinage (figure 1A), et inversement (figure 1B). On est ainsi assuré que dans l'une et l'autre position un électroaimant est toujours apte à développer un effort maximum. A cette fin, l'un des noyaux, par exemple le noyau 9 du second électroaimant 8, est solidarisé directement au corps 2 ou lui est solidarisé par une liaison relativement courte de manière telle que, dans la première position du dispositif illustrée à la figure 1A, le noyau 9 soit partiellement sorti ; parallèlement, l'autre noyau, ici le noyau 6 du premier électroaimant 5, est solidarisé au corps 2 par l'intermédiaire d'une liaison 14 relativement longue de sorte que, dans la première position montrée à la figure 1A, le noyau 6 soit entièrement engagé dans l'électroaimant 5.

Dans ces conditions, le dispositif 1 qui vient d'être décrit est propre à fonctionner de la façon suivante :
- dans la première position du corps 2 (figure 1A), les deux électroaimants 5, 8 ne sont pas excités et l'aimant permanent 11 coagit magnétiquement avec le premier noyau 6 du premier électroaimant 5 en verrouillant, via celui-ci, le corps 2 dans ladite première position qui, dans l'exemple illustré, est une position de solidarisation des deux pièces 3 et 4, le corps 2 étant engagé dans un logement 12 de la pièce 4 en vis-à-vis ; l'aimant permanent 11 est choisi de manière à générer un effort de "collage" statique élevé propre à absorber les facteurs de charge subis par la pièce 3 et/ou la pièce 4, et le champ est de courte portée ;
- pour déplacer le corps 2 de sa première à sa seconde position, on excite le premier électroaimant 5 de façon polarisée de manière à générer un champ magnétique égal et de sens opposé à celui engendré par l'aimant permanent 11 ; le premier noyau 6 du premier électroaimant 5 est ainsi déverrouillé et l'effort de maintien dans la première position est annulé ; on excite alors le second électroaimant 8 qui amène le corps 2 dans sa seconde position en entraînant le premier noyau 6 du premier électroaimant 5, le premier électroaimant 5 étant désexcité dès que le premier noyau 6 est écarté de l'aimant permanent 11 ;
- le corps 2 est maintenu dans ladite seconde position tant que le second électroaimant 8 est excité (figure 1B) ; les deux pièces 3 et 4 sont alors libres de se déplacer l'une par rapport à l'autre ;
- pour déplacer le corps 2 de sa seconde position dans ladite première position, on entraîne le corps 2 de ladite seconde position vers ladite première position en entraînant aussi le premier noyau 6 du premier électroaimant 5 qui est amené en coaction fonctionnelle magnétique avec l'aimant permanent 11, ce qui assure le verrouillage des deux pièces 3 et 4 en liaison l'une avec l'autre.

Le déplacement du corps 2 de la seconde vers la première position peut être réalisé de diverses manières. Une solution possible pourrait consister à exciter l'un et/ou l'autre des électroaimants 5, 8 de façon polarisée de manière telle que le noyau 6 et/ou 9 entraîne le corps 2 en direction de la pièce 4 en vis-à-vis jusque dans le logement 12 pour assurer l'accouplement mutuel des deux pièces 3, 4.

Cependant, une autre solution, beaucoup plus intéressante car plus fiable en regard de la sécurité et à ce titre préférée, consiste à prévoir des moyens de rappel 13 associés fonctionnellement au corps 2 de manière telle que les moyens de rappel 13 soient inopérants lorsque le corps 2 se trouve dans sa première position (figure 1A) et soient propres à rappeler le corps 2 vers sa première position lorsque ledit corps 2 est dans sa seconde position (figure 1B). Dans ces conditions, pour ramener le corps 2 de sa seconde position à sa première position, on désexcite le second électroaimant 8 et le corps 2 est ramené dans sa première position par les moyens de rappel 13. Dans un exemple de réalisation intéressant qui est illustré aux figures 1A et 1B, les moyens de rappel comprennent au moins un ressort de rappel 13, par exemple un ressort de compression qui est positionné entre le corps 2 et la structure (notamment le carter) du dispositif 1 ou la pièce 3 supportant ledit dispositif 1.

Par fonctionnellement associé au corps 2, on entend dire des moyens de rappel 13 qu'il sont interposés entre un organe ou partie fixe du dispositif 1 (par exemple son carter) ou de la pièce 3 qui supporte le dispositif 1 et un quelconque organe de l'équipage mobile formé de tous les organes déplacés en même temps que le corps 2, à savoir notamment le corps 2 lui-même, les noyaux 6 et 9 des deux électroaimants et leurs éventuelles liaisons (telles que 14) au corps 2. Dans l'agencement montré aux figures 1A et 1B, les moyens de rappel comprennent un ressort hélicoïdal de compression 13 monté coaxialement au noyau 9 du second électroaimant 8, entre ledit corps 2 et la pièce 3.

On soulignera qu'un avantage fondamental de l'agencement avec des moyens de rappel 13 structurellement et fonctionnellement indépendants des électroaimants 5, 8 comme montré aux figures 1A et 1B réside dans son caractère sécuritaire : en cas de coupure de l'alimentation électrique d'excitation du second électroaimant 8 dans la position de maintien illustrée à la figure 1B, les moyens de rappel 13 ramènent automatiquement le corps 2 dans la première position (figure 1A).

La précharge du ressort de rappel 13 dans la première position doit être déterminée à la valeur nécessaire pour assurer un retour spontané du corps 2 dans la première position. De son côté, le second électroaimant 8 doit être dimensionné de manière à pouvoir déplacer le corps 2 de la première position à la seconde position en surmontant l'effort du ressort de rappel 13.

A la figure 4 est représentée en perspective une réalisation concrète possible du dispositif 1 (les mêmes références numériques sont conservées pour désigner les mêmes organes qu'aux figures 1A, 1B) qui se présente sous forme d'un ensemble préassemblé propre à être monté dans un logement de la pièce de support (pièce 3 des figures 1A, 1B). On notera la forme sensiblement parallélépipédique rectangle compacte du dispositif 1. Dans l'exemple montré à la figure 4, le corps 2 est constitué par un pontet 20 qui a pour fonction de solidariser le second noyau 9 entouré du ressort de rappel 13 et la liaison 14, tandis que la fonction de verrou est dévolue à un pion ou galet 21 monté sur le pontet 20 ; c'est ce pion ou galet 21 qui est propre à s'engager dans un logement en vis-à-vis pour former verrou.

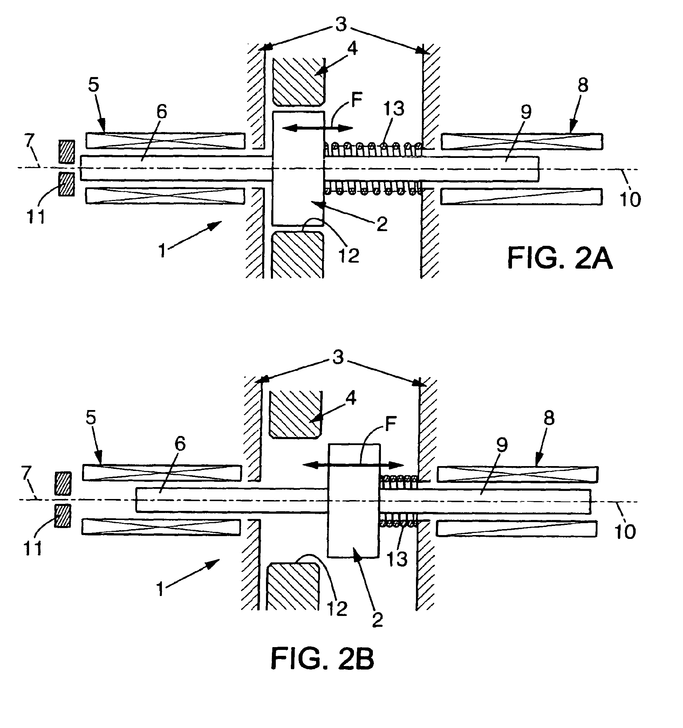

Aux figures 2A et 2B est montrée une variante de réalisation de l'agencement des figures 1A et 1B qui peut être mis en oeuvre si la conformation et les positions relatives des pièces 3 et 4 le permettent. Les divers organes composants du dispositif 1 et leurs fonctions respectives restent identiques à ceux de l'agencement des figures 1A et 1B (ils sont désignés par les mêmes références numériques), à leur positionnement près. Dans cette variante de réalisation, les premier et second électroaimants 5 et 8 respectivement sont disposés parallèlement l'un à l'autre de part et d'autre du corps 2, et notamment, pour éviter la génération d'un couple susceptible de perturber le fonctionnement souhaité du dispositif, les deux électroaimants 5, 8 sont disposés de part et d'autre du corps 2 de manière que leurs noyaux 6, 9 respectifs s'étendent sensiblement coaxialement l'un à l'autre ; autrement dit, les deux noyaux 6 et 9 respectifs sont sensiblement alignés et coaxiaux. Pour le reste, le fonctionnement du dispositif 1 reste identique à ce qui a été exposé plus haut.

On notera que, dans cette variante de réalisation, le positionnement mutuellement décalé des deux noyaux 6, 9 des électroaimants est obtenu de construction et les deux noyaux 6, 9 peuvent être tous deux solidarisés directement au corps 2 comme montré aux figures 2A et 2B, ou bien lui être tous deux solidarisés par l'intermédiaire de liaisons respectives (non montrées).

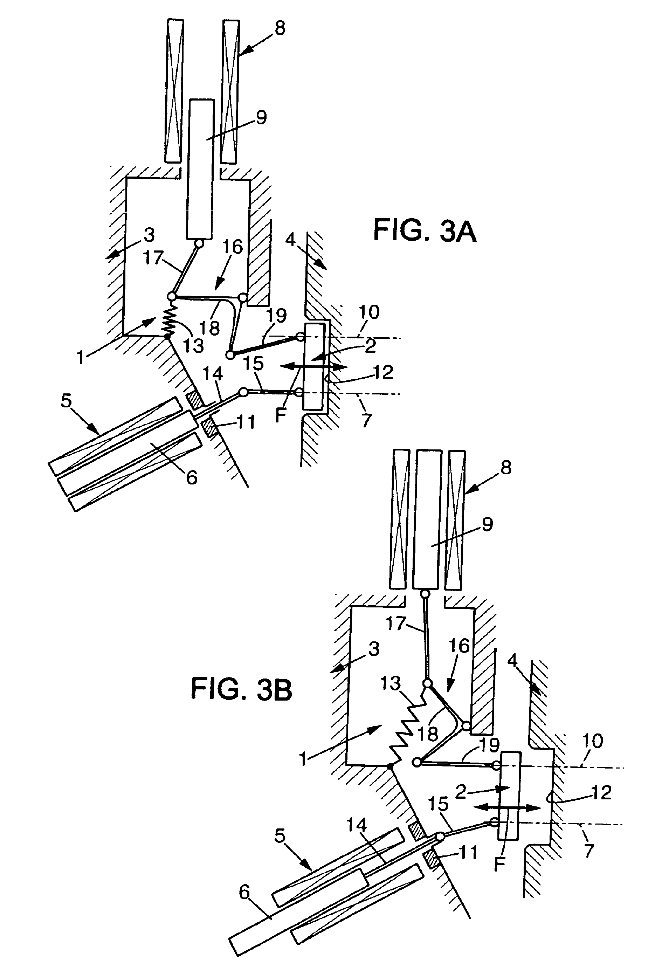

Comme mentionné plus haut, le montage parallèle des deux électroaimants n'est pas impératif dans la mesure où de la place est disponible. Aux figures 3A et 3B est illustré un autre mode de réalisation d'un dispositif conforme à l'invention dans lequel les deux électroaimants 5 et 8 sont disposés sous des angles quelconques l'un par rapport à l'autre et par rapport au corps 2. Sur les figures 3A, 3B, on a conservé les mêmes références numériques pour désigner les organes et parties identiques à ceux des figures 1A, 1B, 2A, 2B.

Le corps 2 étant déplaçable sur une trajectoire (flèche F) de même direction qu'aux figures précédentes, le premier électroaimant 5 est disposé incliné par rapport à cette trajectoire et le second électroaimant 8 est disposé transversalement (par exemple approximativement perpendiculairement) à cette trajectoire.

Pour ce qui est tout d'abord du premier électroaimant 5, la liaison 14 précitée, notamment en forme de tige, solidaire de son noyau 6 est raccordée au corps 2 par une bielle 15 de liaison qui est articulée en rotation à ses deux extrémités respectivement avec le corps 2 et avec la tige 14.

Pour ce qui est maintenant du second électroaimant 8, son noyau 9 est raccordé au corps 2 par l'intermédiaire d'une liaison 16 articulée à renvoi d'angle. Cette liaison 16 comprend une biellette 17 interposée, avec articulations rotatives, entre l'extrémité du noyau 9 et l'extrémité d'un bras d'une pièce en L formant renvoi d'angle 18 monté pivotant par son sommet sur la pièce 3. L'extrémité de l'autre bras du renvoi d'angle 18 est raccordée, avec articulations rotatives, au corps 2 par l'intermédiaire d'une seconde biellette 19.

Pour ce qui est maintenant du ressort de rappel 13, il pourrait être constitué par un ressort hélicoïdal de compression interposé entre le corps 2 et une pièce fixe, comme envisagé précédemment. A titre de variante, le ressort de rappel est ici constitué sous forme d'un ressort de traction interposé entre la liaison articulée de la bielle 17 et du bras correspondant du renvoi d'angle 18 et un point fixe de la pièce 3.

Le mode de fonctionnement du dispositif illustré aux figures 3A, 3B demeure identique à ce qui a été exposé plus haut.

Quel que soit le mode de réalisation adopté, le premier électroaimant 5 n'a qu'un fonctionnement intermittent et bref, uniquement pour libérer l'effet de blocage procuré par l'aimant permanent 11. De ce fait, le premier électroaimant 5 peut être petitement dimensionné, par exemple typiquement d'une puissance de 4 W alimenté sous une tension continue régulée de 5 V. Le second électroaimant 8, étant destiné à assurer le maintien du corps 2 dans la seconde position (position de déverrouillage) doit donc être sous tension pendant toute la durée du déverrouillage. Il sera alors choisi d'un type plus puissant, par exemple typiquement 20 W alimenté sous une tension impulsionnelle de 28 V qui permet de réduire l'échauffement. Un tel choix des deux électroaimants 5, 8 permet de limiter de façon très importante l'énergie électrique nécessitée pour le fonctionnement du dispositif.

## Revendications

1. Dispositif (1) propre à déplacer, sur une trajectoire (F) sensiblement linéaire, un corps (2) entre une première et une seconde positions prédéterminées, **caractérisé en ce qu'**il comprend :
- un premier électroaimant (5) qui possède un premier noyau (6) mobile solidaire dudit corps (2) et qui est agencé pour avoir un axe d'action (7) sur ledit corps (2) sensiblement parallèle à ladite trajectoire (F) linéaire,
- un second électroaimant (8) qui possède un second noyau (9) mobile solidaire dudit corps (2) et qui est agencé pour avoir un axe d'action (10) sur ledit corps (2) sensiblement parallèle à ladite trajectoire (F) linéaire, et
- un aimant permanent (11) associé fonctionnellement au premier noyau (6) en étant disposé de manière à coagir magnétiquement fonctionnellement avec ledit premier noyau (6) lorsque le corps (2) se trouve dans sa première position,
ce grâce à quoi le dispositif (1) est propre à fonctionner de la façon suivante :
• dans la première position du corps (2), les deux électroaimants (5, 8) ne sont pas excités et l'aimant permanent (11) coagit magnétiquement avec le premier noyau (6) en verrouillant, via celui-ci, le corps (2) dans ladite première position,
• pour déplacer le corps (2) de sa première à sa seconde position, on excite le premier électroaimant (5) de façon polarisée de manière à générer un champ magnétique égal et de sens opposé à celui engendré par l'aimant permanent (11), le premier noyau (6) du premier électroaimant (5) étant ainsi déverrouillé, et on excite le second électroaimant (8) qui amène le corps (2) dans sa seconde position en entraînant le premier noyau (6), le premier électroaimant (5) étant désexcité dès que le premier noyau (6) est écarté de l'aimant permanent (11),
• le corps (2) est maintenu dans ladite seconde position tant que le second électroaimant (8) est excité, et
• pour déplacer le corps (2) de sa seconde position dans ladite première position, on entraîne le corps (2) de ladite seconde position vers ladite première position en entraînant aussi le premier noyau (6) qui est amené en coaction fonctionnelle magnétique avec l'aimant permanent (11).

2. Dispositif selon la revendication 1, **caractérisé en ce qu'**il comporte des moyens de rappel (13) associés fonctionnellement au corps (2) de manière telle que les moyens de rappel (13) soient inopérants lorsque le corps (2) se trouve dans sa première position et soient propres à rappeler le corps (2) vers sa première position lorsque ledit corps (2) est dans sa seconde position, ce grâce à quoi, pour ramener le corps de sa seconde position à sa première position, on désexcite le second électroaimant (8) et le corps (2) est ramené dans sa première position par les moyens de rappel (13).

3. Dispositif selon la revendication 2, **caractérisé en ce que** les moyens de rappel comprennent au moins un ressort (13).

4. Dispositif selon l'une quelconque des revendications 1 à 3, **caractérisé en ce que** les premier et second électroaimants (5, 8) sont agencés avec des fonctionnements en opposition de manière telle que le noyau (resp. 6, 9) de l'un soit en position saillante alors que le noyau (resp. 9, 6) de l'autre est en position enfoncée, et inversement.

5. Dispositif selon l'une quelconque des revendications 1 à 4, **caractérisé en ce que** les premier et second électroaimants (5, 8) sont disposés sensiblement parallèlement l'un à l'autre.

6. Dispositif selon l'une quelconque des revendications 1 à 5, **caractérisé en ce que** les premier et second électroaimants (5, 8) sont disposés d'un même côté du corps (2).

7. Dispositif selon l'une quelconque des revendications 1 à 5, **caractérisé en ce que** les premier et second électroaimants (5, 8) sont disposés de part et d'autre du corps (2).

8. Dispositif selon les revendications 5 et 7, **caractérisé en ce que** les deux électroaimants (5, 8) sont disposés de part et d'autre du corps avec leurs noyaux (6, 9) respectifs situés sensiblement coaxialement l'un à l'autre.

## Claims

1. A device (1) suitable for moving a body (2) along a substantially linear path (F) between first and second predetermined positions, **characterized in that** it comprises:
- a first electromagnet (5) which has a first moving core (6) that is secured to said body (2) and that is arranged to have an axis (7) of action on said body (2) that is substantially parallel to said linear path (F);
- a second electromagnet (8) which has a second moving core (9) that is secured to said body (2) and that is arranged to have an axis (10) of action on said body (2) that is substantially parallel to said linear path (F); and
- a permanent magnet (11) that is associated functionally with the first core (6) while being disposed in a manner such that it co-operates magnetically and functionally with said first core (6) when the body (2) is itself in the first position thereof;
whereby the device (1) is suitable for operating as follows:
. when the body (2) is in the first position, the two electromagnets (5, 8) are not excited and the permanent magnet (11) co-operates magnetically with the first core (6) to lock the body (2), via said core, in said first position;
. in order to move the body (2) from the first position to the second position thereof, the first electromagnet (5) is excited in polarized manner so as to generate a magnetic field that is equal and opposite to the field generated by the permanent magnet (11), the first core (6) of the first electromagnet (5) thus being unlocked, and the second electromagnet (8) is then excited and brings the body (2) into the second position thereof while driving the first core (6), the first electromagnet (5) being de-excited as soon as the first core (6) is moved away from the permanent magnet (11);
. the body (2) is held in said second position so long as the second electromagnet (8) is excited; and
. in order to move the body (2) from the second position thereof into said first position, the body (2) is driven from said second position to said first position, while also driving the first core (6) which is brought into magnetic co-operation with the permanent magnet (11).

2. A device according to claim 1, **characterized in that** it further comprises return means (13) associated functionally with the body (2) in a manner such that return means (13) are inoperative when the body (2) is itself in the first position thereof and are suitable for returning the body (2) to the first position thereof when said body (2) is in the second position thereof, whereby, in order to move back the body from the second position to the first position thereof, the second electromagnet (8) is de-excited and the body (2) is moved back into its first position by the return means (13).

3. A device according to claim 2, **characterized in that** the return means comprise at least one spring (13).

4. A device according to any one of claims 1 to 3, **characterized in that** the first and second electromagnets (5, 8) are arranged to operate in opposition so that the core (resp. 6, 9) of one of them is in an "out" position while the core (resp. 9, 6) of the other of them is in the "in" position, and vice versa.

5. A device according to any one of claims 1 to 4, **characterized in that** the first and second electromagnets (5, 8) are disposed substantially parallel to each other.

6. A device according to any one of claims 1 to 5, **characterized in that** the first and second electromagnets (5; 8) are disposed on the same side of the body (2).

7. A device according to any one of claims 1 to 5, **characterized in that** the first and second electromagnets (5, 8) are disposed on either side of the body (2).

8. A device according to any one of claims 5 to 7, **characterized in that** the two electromagnets (5, 8) are disposed on either side of the body with their respective cores (6, 9) being situated substantially coaxially to each other.

## Patentansprüche

1. Vorrichtung (1), die geeignet ist, um auf einer im Wesentlichen linearen Bahn (F) einen Körper (2) zwischen einer ersten und einer zweiten vorbestimmten Stellung zu verschieben, **dadurch gekennzeichnet, dass** sie aufweist:
- einen ersten Elektromagnet (5), der einen ersten beweglichen Kern (6) besitzt, welcher mit dem Körper (2) fest verbunden und eingerichtet ist, um eine Einwirkungsachse (7) auf den Körper (2) im Wesentlichen parallel zu der linearen Bahn (F) zu haben,
- einen zweiten Elektromagnet (8), der einen zweiten beweglichen Kern (9) besitzt, welcher mit dem Körper (2) fest verbunden und eingerichtet ist, um eine Einwirkungsachse (10) auf den Körper (2) im Wesentlichen parallel zu der linearen Bahn (F) zu haben, und
- einen Dauermagnet (11), der funktionsmäßig dem ersten Kern (6) zugeordnet ist, indem er so angeordnet ist, dass er magnetisch funktionsmäßig mit dem ersten Kern (6) zusammenwirkt, wenn sich der Körper (2) in seiner ersten Stellung befindet,
wodurch die Vorrichtung (1) geeignet ist, um folgendermaßen zu arbeiten:
• in der ersten Stellung des Körpers (2) werden die zwei Elektromagnete (5, 8) nicht erregt, und der Dauermagnet (11) wirkt magnetisch mit dem ersten Kern (6) zusammen, indem er über diesen den Körper (2) in der ersten Stellung verriegelt,
• um den Körper (2) von seiner ersten in seine zweite Stellung zu verschieben, wird der erste Elektromagnet (5) polarisiert erregt, um ein Magnetfeld zu erzeugen, das gleich dem und von entgegengesetzter Richtung zu demjenigen ist, das von dem Dauermagnet (11) erzeugt wird, wobei der erste Kern (6) des ersten Elektromagneten (5) so entriegelt wird, und wird der zweite Elektromagnet (8) erregt, der den Körper (2) in seine zweite Stellung bringt, indem er den ersten Kern (6) antreibt, wobei der erste Elektromagnet (5) entregt wird, sobald der erste Kern (6) von dem Dauermagnet (11) entfernt ist,
• der Körper (2) wird in der zweiten Stellung gehalten, so lange der zweite Elektromagnet (8) erregt ist, und
• um den Körper (2) von seiner zweiten Stellung in seine erste Stellung zu verschieben, wird der Körper (2) von der zweiten Stellung in die erste Stellung angetrieben, indem auch der erste Kern (6) angetrieben wird, der in funktionsmäßige magnetische Zusammenwirkung mit dem Dauermagnet (11) gebracht wird.

2. Vorrichtung nach Anspruch 1, **dadurch gekennzeichnet, dass** sie Rückstellmittel (13) aufweist, die funktionsmäßig derart dem Körper (2) zugeordnet sind, dass die Rückstellmittel (13) unwirksam sind, wenn der Körper (2) sich in seiner ersten Stellung befindet, und den Körper (2) in seine erste Stellung zurückführen können, wenn der Körper (2) in seiner zweiten Stellung ist, wodurch, um den Körper aus seiner zweiten Stellung in seine erste Stellung zurückzuführen, der zweite Elektromagnet (8) entregt und der Körper (2) von den Rückstellmitteln (13) in seine erste Stellung zurückgeführt wird.

3. Vorrichtung nach Anspruch 2, **dadurch gekennzeichnet, dass** die Rückstellmittel mindestens eine Feder (13) aufweisen.

4. Vorrichtung nach einem der Ansprüche 1 bis 3, **dadurch gekennzeichnet, dass** der erste und der zweite Elektromagnet (5, 8) entgegengesetzt betrieben werden, derart, dass der Kern (6 bzw. 9) des einen in vorstehender Stellung ist, während der Kern (9 bzw. 6) des anderen in eingedrückter Stellung ist, und umgekehrt.

5. Vorrichtung nach einem der Ansprüche 1 bis 4, **dadurch gekennzeichnet, dass** der erste und der zweite Elektromagnet (5, 8) im Wesentlichen parallel zueinander angeordnet sind.

6. Vorrichtung nach einem der Ansprüche 1 bis 5, **dadurch gekennzeichnet, dass** der erste und der zweite Elektromagnet (5, 8) auf der gleichen Seite des Körpers (2) angeordnet sind.

7. Vorrichtung nach einem der Ansprüche 1 bis 5, **dadurch gekennzeichnet, dass** der erste und der zweite Elektromagnet (5, 8) zu beiden Seiten des Körpers (2) angeordnet sind.

8. Vorrichtung nach den Ansprüchen 5 und 7, **dadurch gekennzeichnet, dass** die zwei Elektromagnete (5, 8) zu beiden Seiten des Körpers angeordnet sind, wobei ihre Kerne (6, 9) sich im Wesentlichen koaxial zueinander befinden.
